# EUROPÄISCHE PATENTSCHRIFT

(11) **EP 1 672 446 B1**
(45) Veröffentlichungstag und Bekanntmachung des Hinweises auf die Patenterteilung: **02.07.2008**
(21) Anmeldenummer: 05026804.4
(22) Anmeldetag: 08.12.2005
(51) Int. Cl.: G05B 19/05

(54) **Sichere Eingabe-/Ausgabe-Baugruppen für eine Steuerung**
Secure Input/Ouput assembly for a controller
Module d'entrée/sortie sécurisé pour un controleur

(30) Priorität: 18.12.2004 DE 102004061013
(43) Veröffentlichungstag der Anmeldung: 21.06.2006
(73) Patentinhaber: Bosch Rexroth AG, 70184 Stuttgart (DE)
(72) Erfinder: Mühlbauer, Michael, 97737 Gemünden (DE); Staab, Thomas, 64756 Untermossau (DE); Engel, Joachim, 64743 Beerfelden (DE)

(56) Entgegenhaltungen:
- US-A- 5 313 386
- US-A- 5 777 874
- ZENDER P: "SICHERHEITSGERICHTETE SPS IN ANLAGEN MIT GEFAHRDUNGSPOTENTIAL SAFETY RELATED PLC IN PLANTS WITH HAZARD POTENTIAL" AUTOMATISIERUNGSTECHNISCHE PRAXIS - ATP, OLDENBOURG INDUSTRIEVERLAG, MUNCHEN, DE, Bd. 36, Nr. 12, 1. Dezember 1994 (1994-12-01), Seiten 27-34, XP000483708 ISSN: 0178-2320
- NIX H G: "FEHLERTOLERANT AUTOMATISIEREN DURCH 1-VON-2-REDUNDANZ" AUTOMATISIERUNGSTECHNISCHE PRAXIS - ATP, OLDENBOURG INDUSTRIEVERLAG, MUNCHEN, DE, Bd. 33, Nr. 6, 1. Juni 1991 (1991-06-01), Seiten 296-301, XP000237562 ISSN: 0178-2320

## Beschreibung

Die vorliegende Erfindung entspringt dem Gebiet der Automatisierungstechnik, insbesondere der programmierbaren Steuerungen und beschreibt ein Verfahren sowie eine Vorrichtung zur Erhöhung der Sicherheit bei Anwendungsprozessen.

Anwendungsprozesse werden in der Regel mittels einer programinierbaren Steuerung oder eines Prozessleitsystems und einer Vielzahl von Feldgeräten realisiert. Die Aufgabe der Feldgeräte ist es, die Prozesszustände zu erfassen oder zu überwachen und diese prozessrelevanten Informationen an die übergeordnete Steuerung weiterzugeben oder prozessrelevante Informationen von der Steuerung zu übernehmen. Feldgeräte können zum Beispiel Sensoren, Taster, Bewegungsmelder, aber auch elektrische Antriebe sein. Die Verbindung zwischen Feldgerät und Steuerung erfolgt beispielsweise mittels sogenannter Eingabe-/Ausgabemittel, die im weiteren kurz als E/A-Baugruppen bezeichnet werden sollen. Die, E/A-Baugruppen können mit der Steuerung beispielsweise mittels eines Feldbusses kommunizieren. Die E/A-Baugruppen können hierarchisch gegliedert sein und werden in der Regel mittels eines sogenannten Feldbuskopfes am Feldbus angebunden. Die Schrift US 6,016,523 zeigt eine modular aufgebaute E/A-Baugruppe.

Aktuell ist von der Anmelderin unter der Bezeichnung SERCOS Interface® (SErial Real Time COmmunication System) ein verteiltes Kommunikationssystem mit ringförmiger Struktur auf dem Markt erhältlich, welches als Feldbus geeignet wäre, aber nicht zwingend vorgeschrieben ist. Die Teilnehmer sind hier üblicherweise mittels Lichtwellenleiter mit einem Zentralteilnehnier (z.B. der Steuerung) verbunden. Das SERCOS interface® spezifiziert eine streng hierarchische Kommunikation. Daten werden in Form von Datenblöcken, den sogenannten Telegrammen oder "Frames" in zeitlich konstanten Zyklen zwischen der Steuerung (Master) und den Unterstationen (Slave) ausgetauscht. Unmittelbare Kommunikation zwischen den weiteren Teilnehmern bzw. Unterstationen findet nicht statt. Zusätzlich werden Dateninhalte festgelegt, d.h. die Bedeutung, Darstellung und Funktionalität der übertragenen Daten ist in großem Maße vordefiniert. Bei dem SERCOS interface® entspricht dem Master die Anschaltung der Steuerung an den Ring und dem Slave die Anschaltung einer oder mehrerer Unterstationen (Antriebe oder E/A-Baugruppen). Mehrere Ringe an einer Steuerung sind möglich, wobei die Koordination der einzelnen Ringe zueinander Aufgabe der Steuerung ist und nicht vom SERCOS interface® spezifiziert wird. Alternative Feldbusstandards wären Profibus oder CAN-Bus.

Sogenannte sichere E/A-Baugruppen werden vor allem in Verbindung mit Sicherheitssteuerungen eingesetzt. Diese Sicherheitssteuerungen kommen bei Sicherheitsanwendungen zum Einsatz, d.h. Anwendungen bei denen eine Störung oder ein Versagen des Steuerungssystems zu einer beachtlichen Gefahr oder Schädigung führen kann. Die Grundvoraussetzung für Komponenten einer Sicherheitsanwendung ist, dass diese im Falle einer Betriebsstörung einen sicheren Zustand annehmen. Unter einem sicheren Zustand wird derjenige Zustand verstanden, der eine potentielle Gefährdung sicher verhindert und der im Fehlerfalle einzunehmen ist. Für den Bereich der Automatisierungstechnik ist in der Regel der energiefreie Zustand ein sicherer Zustand. Zur Kommunikation verwendet man bei diesen Anwendungen sogenannte sichere Feldbusse, die unter anderem auf SERCOS basieren können. Sicherheitsrelevante Komponenten müssen außerdem die einschlägigen Normen, wie die IEC 61508 erfüllen und werden von Zertifizierungsstellen, wie z.B. dem TÜV, zertifiziert. Außerdem gibt es verschiedene Sicherheitslevel SIL 1-4, denen diese Baugruppen zugeordnet werden.

Aus der US 5,313,386 ist eine programmierbare Steuereinheit mit einer Backup - Möglichkeit bekannt. Diese Steuereinheit weist zwei Steuerungseinrichtungen auf, die unabhängig voneinander betrieben werden können. Dabei arbeitet eine erste dieser Steuerungseinrichtungen in einem aktiven Modus und die andere Steuerungseinrichtung übernimmt die Steuerungstätigkeit, wenn die erste Steuerungseinrichtung ausfällt.

Aus der Veröffentlichung "Sicherheitsgerichtete SPS in Anlagen mit Gefährdungspotential Safety Related PLC in Plants with Hazard Potential" von P. Zender, in: Automatisierungstechnische Praxis - ATP, Oldenburg Industrieverlag, München, DE, Bd. 36, Nr. 12, 1. Dezember 1994 (1994-12-01) ist eine E/A - Baugruppe bekannt, bei der eine Soll- und Ist- Vergleichsprozedur implementiert ist.

Sichere Komponenten, wie Sicherheits-E/A-Baugruppen für Sicherheitssteuerungen sind auf dem Markt erhältlich, aber etwa um den Faktor 4 teurer als Standard-E/A-Baugruppen. Der Erfindung liegt daher die Aufgabe zugrunde, eine Lösung zu finden, wie man möglichst preiswert eine Sicherheits-E/A-Baugruppe realisieren kann.

Die Erfindung löst diese Aufgabe mittels einer eingangs genannten Vorrichtung dadurch, dass von einer erfindungsgemäßen sicheren E/A-Baugruppe Mittel zur Überwachung redundant ausgeführter Feldgeräteanschlussbaugruppen und Steuerschnittstellen umfasst sind, wobei die Feldgeräteanschlussbaugruppen mittels einer der Steuerschnittstellen an das Überwachungsmittel angeschlossen sind und das

Überwachungsmittel mittels weiterer Steuerschnittstellen mit der Steuerung kommuniziert.

Unter Feldgeräteanschlussbaugruppen werden beispielsweise Standard-Baugruppen zur Erfassung von Prozessdaten verstanden, welche wesentlich preiswerter als speziell ausgebildete sichere Baugruppen auf dem Markt erhältlich sind. Diese Standard-Baugruppen werden redundant ausgeführt, das heißt zur Realisierung eines einzigen sicheren Datenerfassungskanals sind zwei Standardkanäle erforderlich. Das Überwachungsmittel, in der Regel eine rechnergesteuerte Einheit, nimmt von der übergeordneten Prozesssteuerung Instruktionen über eine Steuerschnittstelle entgegen und agiert aus Sicht der Prozesssteuerung wie eine autarke und sichere Baugruppe. Üblicherweise wird die Verbindung zur Prozesssteuerung mittels eines Feldbusses über einen Feldbuskopf realisiert, wobei an einem Feldbuskopf zusätzlich zur erfindungsgemäßen Baugruppe eine Vielzahl von Standard-Baugruppen angeschlossen sein könnten. Das Überwachungsmittel sitzt in diesem speziellen Falle physikalisch hinter allen nicht sicherheitsgerichteten Baugruppen des Feldbuskopfes. Das Überwachungsmittel- trennt quasi den vom Feldbuskopf verwendeten Bus auf in eine Primär- und Sekundärseite. Andere Anordnungsmöglichkeiten des Überwachungsmittels sind ebenfalls realisierbar. Aus Sicht des Feldbuskopfes stellt das Überwachungsmittel hier den letzten Teilnehmer am Bus dar, welcher primärseitig an diesen Bus angebunden ist. Sekuridärseitig sind am Überwachungsmittel die redundanten Feldgeräteanschlussbaugruppen angeordnet. Das Überwachungsmittel erhält Instruktionen mittels eines sicheren Protokolls und setzt diese nun derart gesichert um, dass aus der Verwendung der Standard-Baugruppen die Funktion einer sicheren Baugruppe resultiert.

Vorzugsweise dient zumindest eine weitere Feldgeräteanschlussbaugruppe zu Diagnosezwecken. Mittels dieser Feldgeräteanschlussbaugruppe besteht die Möglichkeit, die Zustände einer angeschlossenen Ausgabe-Baugruppe einzulesen und beispielsweise mittels des Überwachungsmittels zu verarbeiten und in den Überwachungsprozess mit einzubeziehen. Der tatsächliche Zustand eines Feldgerätes lässt sich somit mit dem Sollzustand mittels des Überwachungsmittels leicht vergleichen.

Vorteilhafterweise umfassen die Steuerschnittstellen auch einen Diagnose- und/oder Taktausgang und/oder eine Energieversorgung, so dass Feldgeräte wie Sensoren oder Aktuatoren angesteuert und kontrolliert werden können. Dies wird gegebenenfalls erforderlich, um einen sicheren Zustand herbeizuführen. Der Taktausgang bzw. der Diagnoseausgang dient zur Versorgung der Eingabe-Baugruppen und die in der Regel schaltbare Energieversorgung zur Versorgung von Ausgabe-Baugruppen.

Das Überwachungsmittel umfasst bevorzugt Mittel zur Datenverarbeitung, zur Takterzeugung, zur Signalanalyse, zur Logikanalyse, zur Steuerung, zur Ausgangsüberwachung, zur Gewährleistung einer sicheren Abschaltung, für Selbsttests, zur Kommunikation und zur Speicherung von Daten und ist vorzugsweise redundant aufgebaut. Es steht damit ein komplettes Prozessorsystem mit umfangreichen Softwarefunktionen zur Verfugung, um den Überwachungsvorgang und die Herstellung eines sicheren Zustandes zu gewährleisten.

Erfindungsgemäß werden als Feldgerätanschlussbaugruppen Standard E/A-Baugruppen verwendet. Diese können zentral und/oder dezentral angeordnet werden und sind wesentlich preiswerter als sichere, in der Regel für Sicherheitssteuerungen konzipierte, E/A-Baugruppen. Für jede Standard E/A-Baugruppe ist eine zweite, identische, Standard E/A-Baugruppe erforderlich, um die geforderte Redundanz zu gewährleisten.

Besonders bevorzugt werden zur Realisierung von sicheren E/A-Baugruppen mittels einer Standard E/A-Baugruppe zumindest zwei Standard-Eingänge und zwei Standard-Ausgänge realisiert und vorzugsweise ist der Eingang einer Standard-Baugruppe zu Diagnosezwecken vorgesehen. Mit Hilfe von zwei Standard-E/A-Kanälen lässt sich damit die Funktion eines sicheren E/A-Kanals preiswert realisieren,

Für die fachmännische Umsetzung der Erfindung bietet sich an, das Überwachungsmittel in Bezug auf die Feldgeräteanschlussbaugruppe als Master und in Bezug auf die Steuerung als Slave auszubilden. Als Slave wird das Überwachungsmittel von der übergeordneten Steuerung beherrscht bzw. synchronisiert und als Master beherrscht bzw. synchronisiert es die Feldgeräteanschlussbaugruppen.

Zur Lösung vielfältiger Aufgaben auch in der Automatisierungstechnik sind an die Feldgeräteanschlussbaugruppen nicht nur passive Feldgeräte sondern auch aktive Feldgeräte wie Aktuatoren (Relais, Schütze, Ventile) und/oder Sensoren angeschlossen.

Vorzugsweise erfolgt die Kommunikation zwischen Überwachungsmittel und Steuerung über einen Feldbus mittels einer sicheren Datenkommunikation, z.B. mittels Safety SERCOS ® als Datenübertragungsprotokoll.

Die Erfindung löst diese Aufgabe ebenfalls mittels eines eingangs genannten Verfahrens dadurch, dass die erfindungsgemäße sichere E/A-Baugruppe Hauptteilnehmer und Nebenteilnehmer umfasst, wobei Soll-Zustände und Ist-Zustände verarbeitet werden, ein Soll-/Ist-Vergleich durchgeführt wird, und bei unterschiedlichen Soll- und Ist-Zuständen ein sicherer Zustand herbeigeführt wird.

Ein zusätzlicher Nebenteilnehmer erfasst vorzugsweise den Ist-Zustand eines anderen Nebenteilnehmers, so dass der Zustand zumindest eines Nebenteilnehmers kontrollierbar wird.

Vorteilhafterweise erfolgt die Kommunikation zwischen Hauptteilnehmer und Steuerung mittels eines sicheren Datentelegramms , wobei es sich vorzugsweise um ein Telegramm nach dem SERCOS ® - Standard handelt. Jeder prinzipiell für die Anwendung geeignete Feldbus ist hier als gleichwertig zu betrachten.

Wenn der Hauptteilnehmer den Ist-Zustand eines Nebenteilnehmers, z.B. mittels eines Kontrollsignals erfasst, kann hierdurch ebenfalls die korrekte Ausführung einer Anweisung an den Nebenteilnehmer durch den Hauptteilnehmer überprüft werden.

Vorteilhafterweise werden Kontrollsignale verwendet, welche einen konstanten Pegel oder einen alternierenden Pegel nutzen. Zusätzlich muss das Kontrollsignal zweikanalig ausgeführt sein, wobei die ggf. alternierenden Pegel antivalent zueinander sind. Damit erhöht sich die Wahrscheinlichkeit der Fehleraufdeckung, denn es werden mehr Zustände und Fehlerkombinationen erkennbar. Dies erreicht man durch Auswertung der Übergangszustände der Kontrollsignale und der logischen Zustände der Kontrollsignale. Vorteilhafterweise umfasst eine Steuerung eine erfindungsgemäße Vorrichtung nach einem der Vorrichtungsansprüche, wobei die Vorrichtung zentral und/oder dezentral zur Steuerung angeordnet sein kann und damit flexibel ausbaubar ist. Diese Steuerung verwendet daher vorzugsweise zusätzlich zu der erfindungsgemäßen sicheren E/A-Baugruppe zentrale und/oder dezentrale Standard-E/A-Baugruppen für nicht sicherheitsrelevante Aufgaben. Sofern die Steuerung zusätzlich elektrische Antriebe umfasst, vergrößert sich das Einsatzspektrum. Insbesondere umfasst eine Sicherheitssteuerung die erfindungsgemäße Lösung. Hierdurch ist eine Sicherheitsaufgabe im Vergleich zum Stand der Technik preiswert realisierbar.

### Bezugszeichenliste

- 10:: Überwachungsmittel
- 11:: Feldgeräteanschlussbaugruppen
- 12:: Sekündärfeldbus
- 13:: Diagnosesignale
- 14:: Ausgangsspannungsversorgung
- 15:: Primärfeldbus
- 16:: Feldbuskopf
- 17:: Standard-E/As
- 18:: Feldbusschnittstelle (Master)
- 18a:: Zentraler Steuerbus am Master
- 19:: Weiche
- 20:: Steuerkanal 1
- 21:: Steuerkanal 2
- 22:: Sicherheitssteuerung
- 23:: Sichei-heits-E/A
- 24:: Mikroprozessor
- 25:: Diagnosemittel
- 26:: Versorgungsspannungsteuerung
- 27:: Taktausgang als Diagnosesignal 13
- 28:: Feldbusslave (primärseitig)
- 29:: Feldbusmaster (sekundärseitig)
- 30:: Takterzeugung
- 31:: Signalanalyse
- 32:: Logikanalyse
- 33:: Steuerwerk
- 34:: Selbsttesteinheit
- 35:: Ausgangsüberwachung
- 36:: Sichere Abschaltung
- 37:: Kommunikationseinheit
- 38:: Parameterspeicher
- 39:: Last
- 40:: Weichen

- 120:: Zustand Sicherheitsfunktion abgewählt (nicht angefordert)
- 120a:: Zyklus 1
- 120b:: Zyklus 2
- 130:: Fehleranalyse bei Anwahl der Sicherheitsfunktion
- 140:: Zustand Fehlerbehandlung (sicherer Zustand im Fehlerfall)
- 150:: Zustand Sicherheitsfunktion angefordert
- 160:: Fehleranalyse bei Abwahl der. Sicherheitsfunktion

- 101:: Eingangszustand, wenn beide Schalter geschlossen sind: E1=T1, E2=T2
- 102:: Fehler erkannt im Zustand 120 (z.B. interner Fehler des Überwachungsmittels)
- 103:: Änderung des Eingangszustands im Zustand 120 gegenüber der Erwartung
- 104:: Fehler erkannt bei Fehleranalyse des Eingangszustands
- 105:: Erkennung des Eingangszustands E1 = E2 = 0 (beide Schalter geöffnet)
- 106:: Fehler erkannt im Zustand 150 (z.B. interner Fehler des Überwachungsmittels)
- 107:: Quittierung des Fehlers (von der übergeordneten Steuerung)
- 108:: Anforderung der Sicherheitsfunktion, solange der Eingangszustand E1=E2=0 sich nicht ändert.
- 109:: Erkennung des Eingangszustands E1 oder E2 ≠ 0
- 110:: Fehlererkennung bei Abwahl der Sicherheitsfunktion
- 111:: Fehlerfreie Abwahl der Sicherheitsfunktion

Die Erfindung wird nachfolgend anhand der Beschreibung bevorzugter Ausführungsbeispiele bzw. Realisierungsformen unter Bezugnahme auf die beigefügten Zeichnungen näher erläutert. In den Zeichnungen bezeichnen dieselben Bezugszeichen dieselben entsprechenden Merkmale. Dabei bilden alle beschriebenen und/oder bildlich dargestellten Merkmale für sich oder in beliebiger sinnvoller Kombination den Gegenstand der vorliegenden Erfindung und zwar unabhängig von ihrer Zusammenfassung in den Patentansprüchen oder deren Rückbeziehungen. In den Zeichnungen bezeichnen gleiche Bezugszeichen oder, gleiche Symbole Baugruppen gleichen Typs.
Fig.1 zeigt die schematische Darstellung einer erfindungsgemäßen sicheren E/A-Baugruppe mit Peripherie mit ihrem Anschluss an die Steuerung;
Fig. 1a zeigt schematisch den internen Aufbau des Überwachungsmittels;
Fig. 1b zeigt schematisch den Funktionsumfang des Überwachungsmittels;
Fig. 2 zeigt schematisch die Abfrage und Überwachung eines sicheren Öffners (zweikanalig, monovalent) mittels der Erfindung;
Fig. 3 zeigt ein grobes Zustandsdiagramm zur Realisierung der in Fig. 2 gezeigten Überwachung des Öffners;
Fig. 4 zeigt schematisch die Abfrage und Überwachung eines sicheren Schließers (zweikanalig, monovalent) mittels der Erfindung;
Fig. 5 zeigt schematisch die Abfrage und Überwachung einer sicheren Schließer- /Öffner-Kömbination (zweikanalig, antivalent) mittels der Erfindung;
Fig. 6 zeigt eine Ausgangsbeschaltung mit einkanaliger Rückmeldung;
Fig. 7 zeigt Beispiele für eine mögliche Systemkonfiguration;

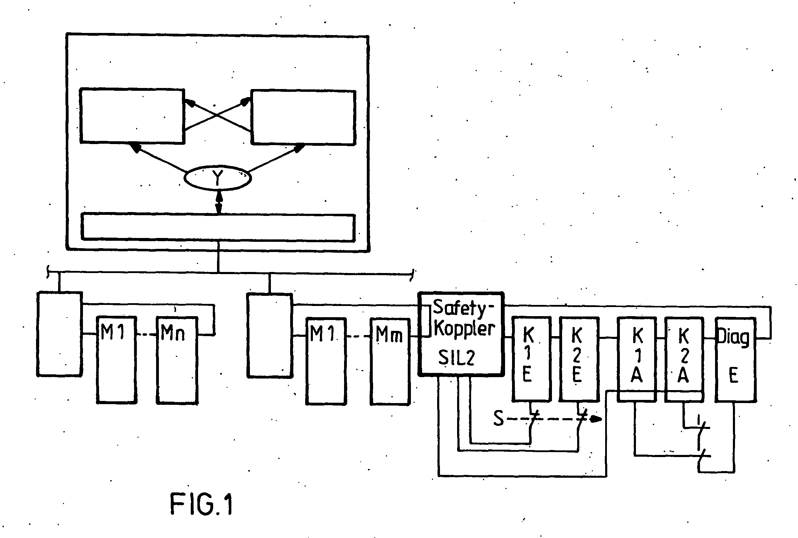

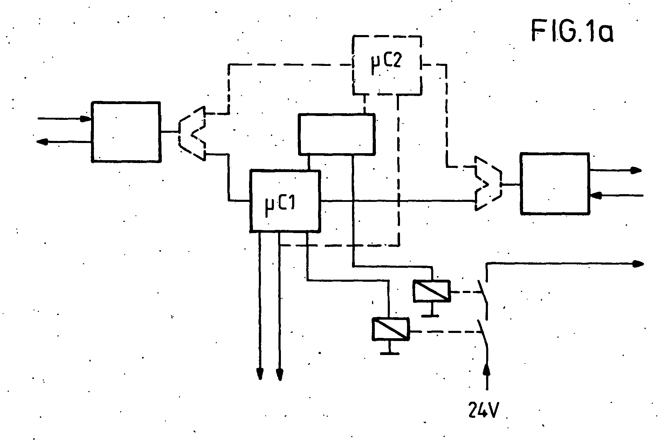

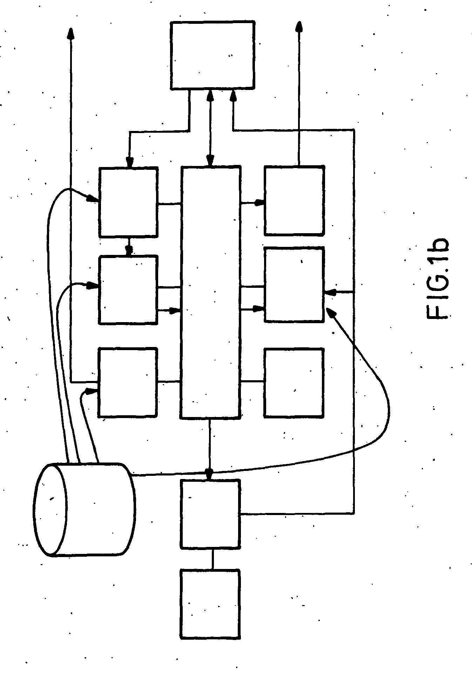

Es werden nun die Figuren 1 bis 7 erläutert. Figur 1 zeigt die erfindungsgemäße sichere E/A-Baugruppe 23 mit Überwachungsmittel 10, Feldgeräteanschlussbaugruppen 11, Steuerschnittstellen 12, 13, 14, Feldbuskopf 16 und Standard E/ABaugruppen 17 sowie externe Lasten 39. Die sichere E/A-Baugruppe ist insbesondere zur Anbindung mittels eines Feldbusses 15, 18a an eine Sicherheitssteuerung 22 mit zwei voneinander unabhängigen Kanälen 20, 21, einer Weiche 19 zur Zusammenführung von Protokollteilen und einem Feldbus-Master-Interface 18 geeignet. Auf eine Weiche 19 kann abhängig vom verwendeten Bussystem auch verzichtet werden, so dass eine direkte Kommunikation der Kanäle 20, 21 mit dem Master-Interface 18 erfolgt (gestrichelte Linien im Blockschaltbild der Sicherheitssteuerung 22).

Das Überwachungsmittel 10 führt jeweils zwei Eingangs- (K1 E und K2 E) sowie zwei Ausgangskanäle (K1 A und K2 A) zur Realisierung einer sicheren E/A-Baugruppe 23 mittels eines Busses 12 zusammen. Die Kommunikation zwischen Überwachungsmittel 10 und Feldgeräteanschlussbaugruppen 11 wird in Abhängigkeit vom Übertragungsmedium (z.B. Feldbus mit seinem feldbusspezifischen Protokoll) protokolltechnisch abgesichert.

Der Feldbuskopf 16 ist Buskoppler zwischen dem zentralen Steuerbus 18a und dem dezentralen Steuerbus 15. Das Überwachungsmittel 10 trennt den dezentralen Steuerbus 15 wiederum in eine Primärseite 15 und eine Sekundärseite 12 auf. Nach dem Prinzip der Tunnelung werden Nutzdaten gesichert und von der Steuerung 22 mittels des Feldbusses 18a und 15 an das Überwachungsmittel 10 übertragen, und vom Überwachungsmittel 10 zum sekundären Feldbus 12 nach Verarbeitung (Aufsplittung in ein Protokoll für die Eingabe oder Ausgabebaugruppen) durchgereicht und umgekehrt. Das Überwachungsmittel 10 sitzt, aus Sicht des Feldbuskopfes 16 physikalisch hinter allen nicht sicherheitsgerichteten Baugruppen 17 des primärseitigen Busses 15. Aus Sicht des Buskopplers 16 ist die Überwachungssteuerung 10 der letzte Teilnehmer am dezentralen Strang 15. Sekundärseitig, d.h. bei Betrachtung der Figur 1 rechts vom Überwachungsmittel 10 sind Standard-E/A-Baugruppen 11 angeschlossen.

Die Realisierung zweier redundanter Eingangskanäle (K1 E, K2 E) erfolgt durch Verwendung zweier Standardeingangsmodule E. Beide Eingangskanäle werden vom Überwachungsmittel 10 überwacht. Die Überwachung erfolgt durch Analyse (Software) der Bussignale 12 für die beiden Kanäle, die über die Taktsignale 27 hardwareseitig gezielt beeinflusst werden, so dass aufgrund der damit verbundenen Erwartungshaltung in Abhängigkeit vom Zustand der Zustandsmaschine der Überwachungseinheit eine Fehleraussage möglich wird. Die Standardausgangsmodule A sind ebenfalls redundant aufgebaut mittels zweier Kanäle (K1 A, K2 A). Beide Ausgangskanäle können durch den Einsatz eines zusätzlichen Diagnose- bzw. Eingangsmoduls Diag überwacht werden. Das Überwachungsmittel 10 kann mittels seiner Lastspannungsversorgung 14 externe Lasten 39 kontrollieren. Damit ist die Lastversorgung sowohl softwareseitig mittels eines Datenprotokolls, als auch hardwareseitig kontrollierbar.

Zusammenfassend bleibt festzuhalten, dass das Überwachungsmittel 10 redundant ausgeführte Feldgeräteanschlussbaugruppen 11 mittels Steuerschnittstellen ansteuert, wobei die Feldgeräteanschlussbaugruppen 11 zweikarialig aufgebaute Eingänge E sowie zweikanalig aufgebaute Ausgänge A umfassen. Die Steuerschnittstellen umfassen sowohl ein Feldbusinterface 15 und 12, Diagnosesignal 13 für das an den Eingängen K1 und K2 angebrachte Feldgerät und eine abschaltbare Ausgangsspannungsversorgung 14 für den zweikanalig aufgebauten Ausgang A. Weiter ist noch die Eingabebaugruppe Diag gezeigt, deren Aufgabe es ist den Zustand der angesteuerten Last 39 am Ausgang A abzufragen und den Status mittels des sekundärseitigen Feldbusses 12 an das Überwachungsmittel 10 zu senden. Bei einem erkannten Fehler kann das Überwachungsmittel 10 mittels der Kommunikation abschalten und auch' die Versorgungsspannung der Ausgänge A mittels der abschaltbaren Ausgangsversorgung 14 abschalten, um den sicheren Zustand im Fehlerfall herbeizuführen.

In Figur 1a ist der innere Aufbau des Überwachungsmittels 10 dargestellt. Es sind gezeigt ein Mikroprozessor 24, ein Diagnosemittel 25, die Anschlüsse für die Diagnosesignale/Taktsignale 13, die Anschlüsse 26 für die Steuerung der Schaltglieder für die Ausgangsspannungsversorgung 14 der Lasten 39 (siehe Figur 1), ein Interface 28 zur Anbindung des Überwachungsmittels 10 an den primärseitigen Feldbus 15 (Fig. 1) und ein Interface 29 zur Anbindung des Übertragungsmittels 10 an den sekundärseitigen Feldbus 12 (Fig. 1). Die gestrichelten Linien sollen die Möglichkeit der redundanten Ausführbarkeit eines für sich sicheren Übertragungsmittels 10 andeuten. So kann z.B. das Prozessorsystem 24 redundant ausgeführt und mittels Weichen 40 gekoppelt werden.

In Figur 1b ist die Softwarestruktur schematisch dargestellt. Es ist im Bild gezeigt die primärseitige Feldbusschnittstelle (Slave) 28 und die sekundärseitige Feldbusschnittstelle (Master) 29, ein Modul zur Takterzeugung 30, ein Modul zur Signalanalyse 31, ein Modul zur Logikanalyse 32, ein Steuerwerk 33, eine Selbsttesteinheit 34, eine Ausgangsüberwachung 35, ein Modul zur sicheren Abschaltung 36, eine Kommunikationseinheit 37 und ein Parameterspeicher 38. Die Feldbusschnittstellen 28, 29 dienen zur Anbindung des Übertragungsmittels 10 an die Peripherie 11 und an die Steuerung 22 (siehe Fig. 1). Die Takterzeugung 30 liefert parametrierbare Taktsignale 27; welche zu den Diagnosesignalen 13 gehören, zur Versorgung externer Peripherie. Das Modul zur Signalanalyse 31 überprüft die über den Sekundärbus eingelesenen Signale, deren Wert bei geschlossenen Schaltern von den durch die Takterzeugung 30 vorgegebenen Taktsignalen abhängt bezüglich der Diskrepanzzeiten und kommuniziert mit dem Logikanalysemodul 32, welches die Fehleranalyse mit Bezug zur Erwartungshaltung durchführt. Die sichere Abschaltung 36 ermöglicht es, die Versorgung der Ausgabegruppen zu steuern, so dass diese bzw. die angeschlossenen Lasten 39 (Figur 1) im Fehlerfalle abschaltbar sind. Die Ausgangsüberwachung 35 überwacht die Ausgangszustände, z.B. durch Rückkopplung der Ausgangszustände mittels eines Diagnosemoduls Diag 11 (Figur 1) zum Überwachungsmittel 10. Die Selbsttesteinheit 34 stellt sicher, dass das Überwachungsmittel 10 stets einwandfrei funktioniert, indem sie die internen Systemkomponenten überprüft. Die Kommunikationseinheit 37 stellt einen sicheren Kommunikationslayer dar, welcher die Kommunikation mittels eines sicheren Übertragungsprotokolls, z.B. Safety-SERCOS ® zur Steuerung realisiert. Das Steuerwerk 33 koordiniert alle angebundenen Module 28, 29, 30, 31 32, 34, 35, 36, 37. Der Parameterspeicher 38 enthält alle Parameter für die Eingangs- und Ausgangsüberwachung sowie für die sichere Kommunikation zur Steuerung 22 (Figur 1).

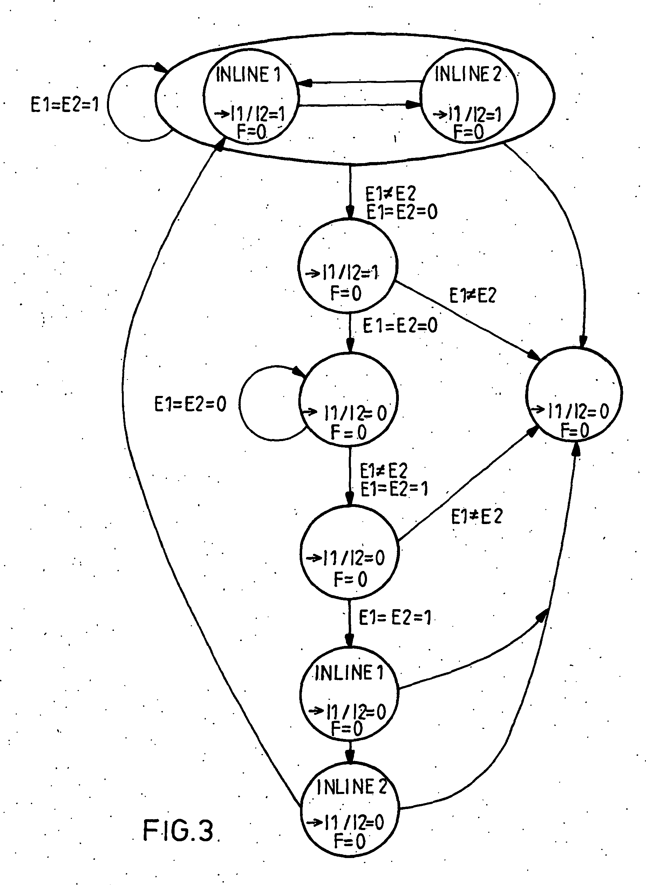

Im hier gezeigten Beispiel wird mittels der Eingänge E1/2 (siehe auch Beschreibung zu Figur 3) der Eingangszustand eingelesen, der von der Schalterstellung S und den Taktsignalen T abhängt. Dieser muss zunächst einer Diskrepanzzeitkontrolle 31 unterzogen werden, anschließend erfolgt die logische Überprüfung 32 und die Weitergabe des Ergebnisses an das Steuerwerk 33. Dieses liefert das Ergebnis über die Kommunikationseinheit 37 an die Steuerung. Es kann nun entschieden werden, ob aufgrund einer vorliegenden Fehlerinformation eine Abschaltung über Modul 36 bewirkt werden soll.

Die von der Steuerung 22 über die Kommunikationseinheit 37 vorgegebene Ausgangsinformation wird über die Kommunikationseinheit 29 und den Sekundärbus zu den Ausgängen übermittelt und gleichzeitig durch die Ausgangsüberwachung einer Fehleranalyse unterzogen. Bei Feststellung eines Fehlers können die Ausgänge über die Kommunikationseinheit 29 und den Sekundärbus, sowie redundant dazu über die Ausgangsbeschaltung 36 in den sicheren Zustand im Fehlerfall überführt werden.

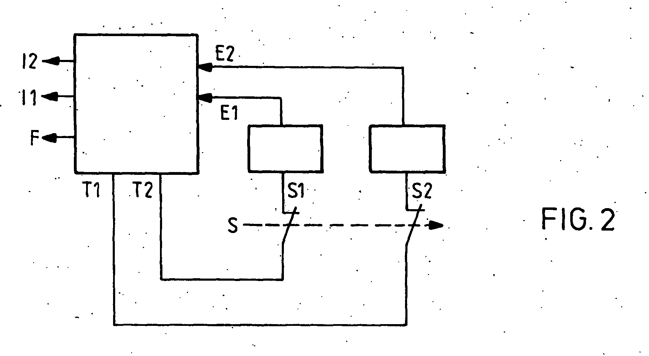

Einleitend zur Beschreibung von Figur 2 sei bemerkt, dass im erfindungsgemäßen sicheren E/A-System 23 bzw. im in Figur 1 ersichtlichen Gesamtsystem aus Kostengründen ausschließlich Standard-E/A-Module 11 eingesetzt werden sollen. Dieser Vorgabe kann nur durch Redundanz Rechnung getragen werden. Man muss somit zur Abbildung eines gewünschten sicheren Eingangs-Bitstrom die doppelte Anzahl von Eingangs-Modulen verwenden. Jedes primärseitige und mittels Bus 15 sicher übertragene Eingangsbit wird demnach sekundärseitig (d.h. auf Seite des Feldbusses 12) durch 2 Eingangsbits abgebildet, welche von zwei voneinander unabhängigen Eingangskanälen K1 E/2 E stammen.

Sensoren bzw. Schalter, die wiederum den beiden Eingangskanälen K1 E und K2 E zugeordnet sind, werden vom Überwachungsmittel 10 in Form von Taktsignalen gesteuert: Die Taktsignale können zueinander antivalent ausgebildet sein. Es ist auch möglich auf einen Takt zu verzichten (reduzierte Fehleranalysemöglichkeiten) und mit festen Pegeln zu arbeiten. Durch Auswertung der mittels der Taktsignale gewonnenen Eingangsinformation E1/2 kann die gesamte Eingangsübertragungsstrecke vom Sensor über die Feldgeräteanschlussbaugruppe und den Sekundärbus bis zur Eingangsüberwachung in Abhängigkeit von den Taktsignalen und dem Zustand der Zustandsmaschine der Eingangsüberwachung überwacht werden, insbesondere auch die korrekte physikalische Anschaltung eines Sensors inkl. der Erkennung von Kurzschlüssen, Querschlüssen, Erdschlüssen und die tatsächliche Funktion eines Sensors bzw. Schalters. Das Überwachungsmittel 10 kann unter anderem folgende Zustände erkennen und unterscheiden: Anforderung und Abwahl der Sicherheitsfunktion (innerhalb oder nach einer parametrierten Diskrepanzzeit) und Fehler (Eingangsfehler, Übertragungsfehler etc.).

Figur 2 zeigt das Prinzip zur Überwachung eines sicheren zweikanaligen Öffners mittels der Erfindung. Im praktischen Einsatz könnte dies ein Not-Aus-Schalter sein. Die Sicherheitsfunktion (z.B. Not-Halt) wird mittels Öffnen mindestens eines der beiden Schalter S1 / S2 angefordert. Es bedeuten im einzelnen E1 und E2 logische Eingangssignale der Signal- bzw. Logikanalyse 31/32 sowie I1 und I2 logische Ausgangssignale der Signal- bzw. Logikanalyse 31/32. Für die Anwahl der Sicherheitsfunktion bzw. die Übermittlung des sicheren Zustands im Fehlerfall gilt hier I1 = I2 = 0. F stellt das Fehlersignal zur Kennzeichnung des Resultats einer Fehleranalyse dar. Ein aktives Fehlersignal F (F=0) bedeutet, dass bei der Eingangsüberprüfung (El, E2) ein Fehler festgestellt wurde. S1/2 können Schalter oder Sensoren zur Betätigung von Schaltern sein, welche gleichzeitig betätigt werden. Die Ausgänge T1, T2 können Taktsignale liefern, aber auch konstante Pegel.

Unter der Maßgabe der Beherrschung eines Spannungsausfalls wird definiert: "Sicherer Zustand" = Zustand, der im Fehlerfall einzunehmen ist und dem spannungslosen oder energiefreien Zustand entspricht. Dieser Zustand wird bei der Anforderung der Sicherheitsfunktion angenommen. Ist die Sicherheitsfunktion nicht angefordert, sind beide Schalter S1/2 geschlossen. In diesem Zustand können die Kanäle K1 und K2 überwacht werden. Ein von T1 stammendes Signal kann somit über S1 zu E1 geführt werden und ein von T2 stammendes Signal kann über S2 zu E2 geführt werden.

Die Abwahl der Sicherheitsfunktion erfolgt durch Schließen beider Schalter S1/2 gleichzeitig (Eventuell wird zusätzlich die Betätigung einer RESET-Taste gefordert). Es wird vorausgesetzt, dass das Überwachungsmittel 10 selbst seine Sicherheit, z.B. durch redundante Ausführung, garantiert (siehe Figur 1a).

Abhängig von der Wahl der Taktsignale T1/2 und der damit verbundenen Erwartungshaltung kann der Zustand der Eingangssignale E1/2 auf Fehler untersucht werden. Bei diesen Fehlern kann es sich unter anderem um Unterbrechungen mit Annahme eines beliebigen Pegels an E1/2, einem Kurzschluss gegen Masse mit Annahme eines beliebigen Pegel an E1/2 oder einen Kurzschluss zwischen E1 und E2 mit Annahme eines beliebigen Pegels handeln.

Mittels der oben definierten Fehleranalyse (siehe Beschreibung zu Figur 1b) bei statischem Zustand der Taktsignale lassen sich prinzipiell High-Fehler (ein Eingang E1/2 liefert fälschlicherweise High-Pegel) und Low-Fehler (ein Eingang E1/2 liefert fälschlicherweise Low-Pegel) erkennen. Der Fehleraufdeckungsgrad lässt sich durch Dynamisierung der Taktsignale erhöhen. Dynamisierung der Taktsignale heißt, dass innerhalb zweier Buszyklen die Taktsignale antivalent getoggelt werden. Im Fehlerfalle dauert es also maximal zwei Buszyklen + ggf. die Diskrepanzzeit, bis der Fehler aufgedeckt ist, d.h. ein Low- und/oder High-Fehler einem Eingang E1/2 eindeutig zuordenbar ist.

Figur 3 zeigt das prinzipielle Zustandsdiagramm der in Figur 2 abgebildeten Öffner-Überwachung. In Abhängigkeit vom internen Zustand (120, 130, 140, 150, 160) der Zustandsmaschine und dem Eingangszustand (Pegel an E1/2) schaltet die Zustandsmaschine die Ausgänge I1/2 und F, verharrt in ihrem Zustand oder führt einen Zustandswechsel durch. Es gibt drei stabile Zustände (120, 140, 150), die Zustände 130 und 160 sind Übergangszustände, die, zeit- bzw. zyklusgesteuert wieder verlassen werden. Die Zustände 120a und 120b sollen die Zyklen des Bustaktes darstellen. Das dargestellte Zustandsdiagramm enthält keine Realisierungsdetails und soll lediglich das prinzipielle Verhalten erläutern. Die möglichen Ereignisse, welche einen Zustandswechsel herbeiführen können, sind der Bezugszeichenliste zu entnehmen.

Angenommen die Zustandsmaschine dient der Überwachung eines zweikanaligen Not-Aus-Schalters zur Anforderung der Not-Halt-Funktion und angenommen der Anwendungsprozess befindet sich in seinem üblichen Betrieb, d.h. der Not-Aus-Schalter ist nicht betätigt, beide Schalter (Figur 2) sind demnach geschlossen (S1=S2=1). An den Eingängen sieht die Zustandsmaschine die Taktsignale E1 = T1 und E2 = T2, d.h. z.B. im Taktzyklus 120a gilt E1=1 / E2 = 0 und im Taktzyklus 120b gilt E1=0 / E2=1, wenn man von alternierenden Taktsignalen ausgeht. Die Zustandsmaschine befindet sich dann im Zustand 120 und,meldet der Steuerung 11/12= 1 und F= 1 (Kein Fehler, Sicherheitsfunktion nicht angefordert). Ohne Änderung (101) verharrt die Zustandsmaschine im Zustand 120. Erkennt die Überwachungseinheit (z.B. über die Selbsttesteinheit 34) einen internen Fehler, verzweigt sie über den Zustandswechsel 102-in den Fehlerzustand 140.

Erkennt die Zustandsmaschine eine Änderung an E1 oder E2 gegenüber der zyklusabhängigen Erwartung, verzweigt sie über den Zustandswechsel 103 in den Zustand 130. Unabhängig davon, ob diese Änderung aufgrund eines regulären Schaltens von S1 und/oder S2 oder aufgrund eines Fehlers erfolgt ist, kann die Zustandsmaschine unmittelbar zur Steuerung die Anforderung der Sicherheitsfunktion signalisieren: I1 = I2 = 0. Im Zustand 130 erfolgt jetzt die Fehleranalyse, eventuell über mehrere Taktzyklen. Spätestens mit Ablauf der parametrierten Diskrepanzzeit muss sich der Eingangszustand E1=E2=0 eingestellt haben, sonst wechselt die Zustandsmaschine über den Pfad 104 in den Fehlerzustand 140.

Hat sich korrekterweise der Eingangszustand E1=E2=0 eingestellt, wechselt die Zustandsmaschine über den Pfad 105 in den Zustand 150 (Sicherheitsfunktion angefordert). Erkennt die Überwachungseinheit (z.B. über die Selbsttesteinheit 34) zwischenzeitlich einen internen Fehler, verzweigt sie über den Zustandswechsel 106 in den Fehlerzustand 140.

Ändern sich im Zustand 150 die Eingangsinformationen nicht (108), so verharrt die Zustandsmaschine im Zustand 150. Ändert sich im Zustand 150 der Eingangszustand, wechselt die Zustandsmaschine in den Fehleranalyse-Zustand 160 mittels Zustandswechsel 109, in dem nach Ablauf der Diskrepanzzeit über mindestens zwei Taktzyklen Fehlerfreiheit der Eingangsbeschaltung festgestellt werden muss, d.h. die Eingangssignale E1/E2 folgen wieder den Taktsignalen T1/T2. Ist dies nicht der Fall, verzweigt die Zustandsmaschine über den Pfad 110 in den Fehlerzustand 140. Ist Fehlerfreiheit festgestellt, so kann die Zustandsmaschine über den Pfad 111 in den Zustand 120 wechseln, in dem der Steuerung 22 über I1=I2=0 die Abwahl der Sicherheitsfunktion signalisiert wird.

Im Fehlerzustand 140 wird der Steuerung über I1 = 0 / I2 = 0 die Anforderung der Sicherheitsfunktion signalisiert und zusätzlich über F = 0 ein Fehler gemeldet. Der Fehlerzustand kann nur verlassen werden, wenn die Fehlermeldung von der Steuerung quittiert wird, dann verzweigt der Automat mittels eines Zustandswechsels 107 immer in den Zustand 150, um vor einer eventuellen Abwahl der Sicherheitsfunktion die umfassende Fehleranalyse durchzuführen.

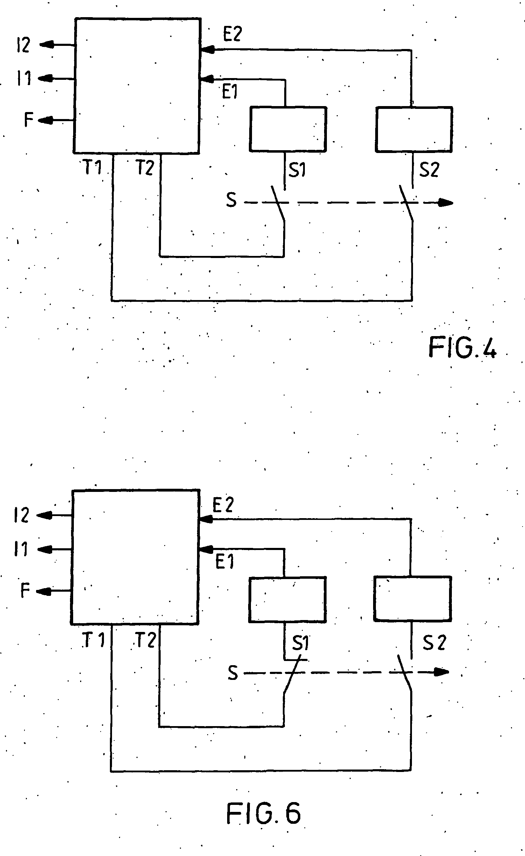

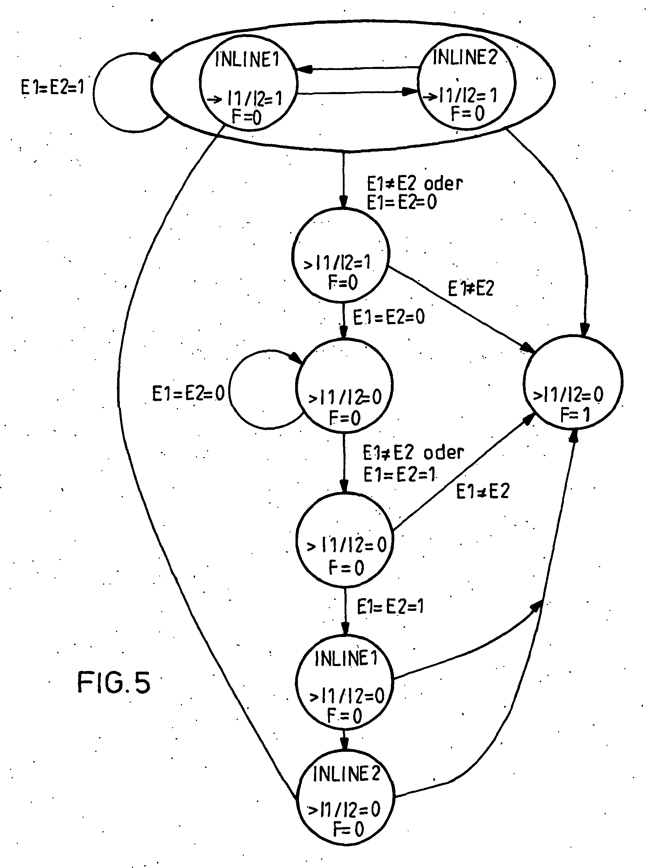

Auf gleiche bzw. ähnliche Weise lassen sich die beiden weiteren möglichen Beschaltungsarten "Monovalent Schließer" (Figur 4) und Schließer-/Öffner-Kombination (Antivalenz) (Figur 5) beherrschen. Anwendungsbeispiele hierfür sind Zustimmtaster und Schutztürüberwachung. In allen Fällen ist der sichere Zustand im Fehlerfall unter Maßgabe der Beherrschung des Spannungsausfalls gleich. Er entspricht beim Monovalent-Schließer dem geöffneten Zustand mindestens eines der beiden Schalter und bei der Antivalenz dem geöffneten Zustand mindestens von Schalter S 1.

Bei Figur 6 soll der Fokus auf der Ausgangsbeschaltung einer Feldgeräteanschlussbaugruppe 11 liegen. In der erfindungsgemäßen Sicherheits-E/A 23 werden bekanntermaßen nur Standard-E/A-Baugruppen eingesetzt. Diese Vorgabe kann wie bereits bekannt - nur durch Redundanz abgesichert werden, so dass nicht nur die sicheren Eingangs-Bits, sondern auch die sicheren (zur zur Peripherie geführten) Ausgangs-Bits durch eine doppelte Anzahl von Ausgangs-Bits abgebildet werden sollte.

Jedes primärseitige, von der Steuerung vorgegebene, sichere Ausgangsbit wird sekundärseitig durch 2 Standard-Ausgänge 11 abgebildet, die von zwei Äusgangsmodulen A mittels zweier getrennter Kanäle K1/2 geliefert werden. Das Ausgangkanalpaar K1/2 A steuert Lasten 39, z.B. zwangsgeführte Sicherheitsrelais oder Schutztür-Zuhaltungen etc. an. Sicherheitskriterium ist das sichere Abschalten der Ausgänge, bzw. der Lasten 39.

Es sind hier generell zwei Abschaltpfade vorgesehen. Zum einen das Abschalten über das sichere Busprotokoll via Bus 15 bzw. 12 und das Abschalten durch Steuerung der Ausgangsversorgung über das Steuermittel 14. Die Überwachung der Zustände der an den Ausgängen angeschlossenen Peripherie P erfolgt durch Abfrage der von der Peripherie P zusätzlich angesteuerten (externen) Schalterzustände S3/4 mittels der Standard-Eingangs-Baugruppe 11 Diag. Diese ist am gleichen Bus 12 wie die anderen. E/A-Baugruppen , 11 angeschlossen. Die Ausgänge können ein- oder zweikanalig überwacht werden, je nach Art der externen sicherheitsgerichteten Schalter. In diesem Beispiel erfolgt eine einkanalige Überwachung.

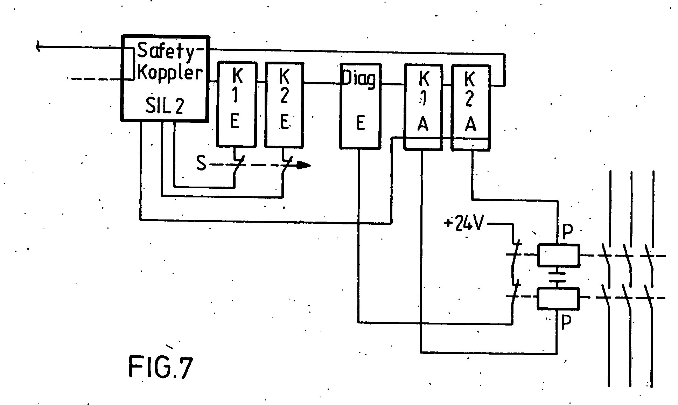

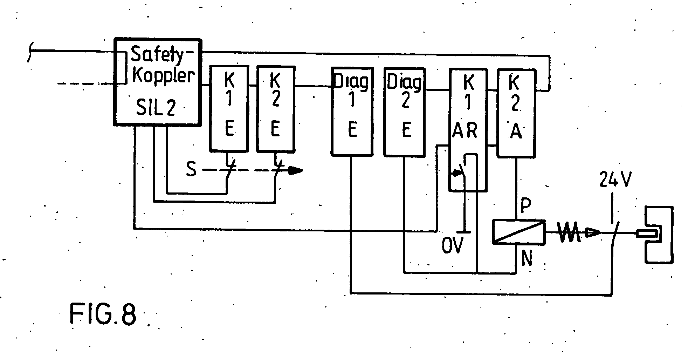

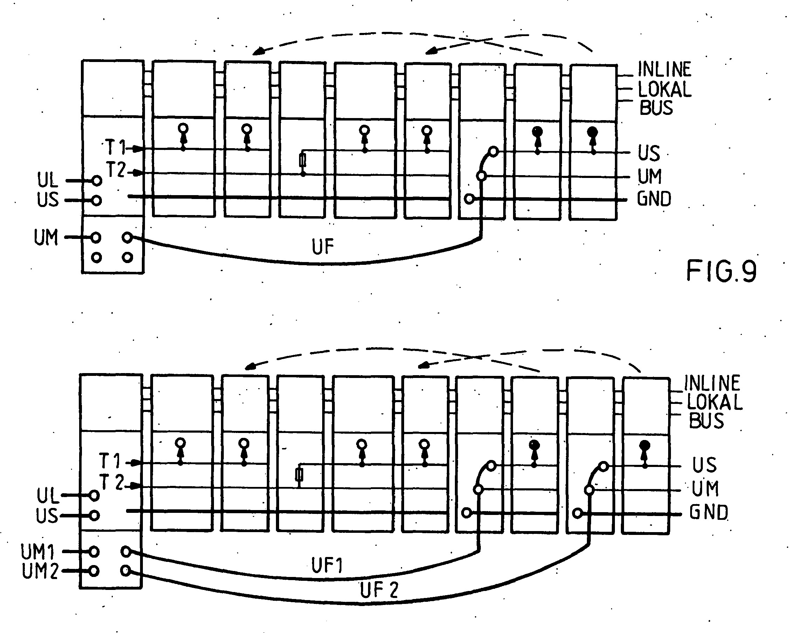

Fig. 7 zeigt zwei Beispiele für die Systemkonfigurätionen einer erfindungsgemäßen sicheren E/A-Baugruppe unter Verwendung einer Überwachungseinheit 10, mehrkanaligen K1/2 Eingangsmodulen E, mehrkanaligen K1/2 Ausgangsmodulen A, Diagnosemodulen D1/2, Versorgungsmodulen P, und Entkoppelmodulen S zum Einspeisen der Takt- bzw. Diagnosesignale für die Eingabe-Schaltgruppen. K1/2 sind die Kanäle, welche von den Eingangs-/Ausgangpfaden umfasst sind. Prinzipiell kann eine erfindungsgemäße E/A-Baugruppe 23 eine bestimmte Anzahl von Standard E/A-Baugruppen 11 umfassen.

Die Beschriftung ist wie folgt zu interpretieren: UL repräsentiert die Versorgungsspannung für die interne Logik (siehe Figur 1a, b) des Überwachungsmittels 10. US ist die Versorgungsspannung für die sekundärseitige Logik des Busses 12 sowie die Diagnosesignale T1/T2. UM,UM1,UM2 sind die Versorgungsspannungen für die Versorgung der an den Ausgängen angeschlossenen Lasten 39. T1,T2 sind die Taktsignale zur Steuerung der Sensorversorung. UF, UF1, UF2 ist die abschaltbare Lastversorgung der Ausgänge. Diag 1 und Diag 2 kennzeichnet Eingangsmbdule E zur Überwachung von Ausgängen A. Im unteren Bild ist die Realisierung eines 2. Abschaltpfades (UF1, UF2) bei Anforderung der Sicherheitsfunktion gezeigt, im oberen Bild ist dagegen nur ein einziger Abschaltpfad UF gezeigt. Die hinter einer Versorgungsschaltgruppe angeordneten Ausgänge A können gemeinsam abgeschaltet werden. Es ist möglich Abschaltgruppen zu bilden, so dass letztlich für jeden Ausgang A eine eigene Abschaltung realisierbar ist.

## Patentansprüche

1. Sichere Eingabe-/Ausgabe-Baugruppe mit Feldgeräteanschlussbaugruppen (11) und Steuerschnittstellen (12, 13, 14, 15) für eine Steuerung, wobei ein Mittel zur Überwachung (10) von Feldgeräteanschlussbaugruppen (11) und Steuerschnittstellen (12,13,14,15) umfasst ist, wobei die Feldgeräteanschlussbaugruppen mittels einer der Steuerschnittstellen (12,13,14) an das Überwachungsmittel (10) angeschlossen sind und das Überwachungsmittel (10) mittels einer weiteren Steuerschnittstelle (15) mit der Steuerung (22) kommuniziert, **dadurch gekennzeichnet, dass** die Feldgeräteanschlussbaugruppen (11) redundant derart ausgeführt sind, dass zur Realisierung eines einzigen sicheren Datenerfassungskanals zwei Standardkanäle verwendet werden, wobei die **Feldgerätanschlussbaugruppen (11) Standard-E/A-Baugruppen (11) sind und** zur Realisierung eines sicheren Einganges bzw. Ausganges dieser zumindest mittels zweier Standard-Eingänge und zweier Standard-Ausgänge einer Standard-E/A-Baugruppe (11) realisiert ist

2. Sichere Eingabe-/Ausgabe-Baugruppe nach Anspruch 1, **dadurch gekennzeichnet, dass** zumindest eine weitere Feldgeräteanschlüssbaugruppe (11) zu Diagnosezwecken dient.

3. Sichere Eingabe-/Ausgabe-Baugruppe nach einem der Ansprüche 1 bis 2, **dadurch gekennzeichnet, dass** die Steuerschnittstellen (12,13,14,15) einen Diagnoseausgang und/oder eine Energieversorgung umfassen.

4. Sichere Eingabe-/Ausgabe-Baugruppe nach einem der Ansprüche 1 bis 3, **dadurch gekennzeichnet, dass** das Überwachungsmittel (10) Mittel zur Takterzeugung (30), zur Signalanalyse (31), zur Logikanalyse (32), zur Steuerung (33), zur Ausgangsüberwachung (35), zur Gewährleistung einer sicheren Abschaltung (35), für Selbsttests (34), zur Kommunikation (37) und zur Speicherung von Daten (38) umfasst und vorzugsweise redundant aufgebaut ist.

5. Sichere Eingabe-/Ausgabe-Baugruppe nach Anspruch 1, **dadurch gekennzeichnet, dass** für jede Standard- E/A-Baugruppe (11) eine zweite Standard E/A-Baugruppe (11) vorhanden ist.

6. Sichere Eingabe-/Ausgabe-Baugruppe nach einem der Ansprüche 1 bis 5 zur Realisierung eines sicheren Einganges bzw. Ausganges, **dadurch gekennzeichnet, dass** ein weiterer Standard-Eingang (11) zu Diagnosezwecken vorgesehen ist.

7. Sichere Eingabe-/Ausgabe-Baugruppe nach Anspruch 1, **dadurch gekennzeichnet, dass** mehrere sichere Eingänge und/oder Ausgänge vorgesehen sind.

8. Sichere Eingabe-/Ausgabe-Baugruppe nach einem der vorhergehenden Ansprüche, **dadurch gekennzeichnet, dass** das Überwachungsmittel (10) in Bezug auf die Feldgeräteanschlussbaugruppe (11) die Funktion eines Masters und in Bezug auf die Steuerung (22) die Funktion eines Slaves hat.

9. Sichere Eingabe-/Ausgabe-Baugruppe nach einem der vorhergehenden Ansprüche, **dadurch gekennzeichnet, dass** die Feldgeräte Aktuatoren und/oder Sensoren sind.

10. Sichere Eingabe-/Ausgabe-Baugruppe nach einem der vorhergehenden Ansprüche, **dadurch gekennzeichnet, dass** zur Datenkommunikation ein Feldbus (12, 15) verwendet wird.

11. Verfahren zur sicheren Erfassung von mittels einer Steuerung erzeugten Anwendungsprözesszuständen mittels einer sicheren Eingabe-/Ausgabe-Baugruppe nach wenigstens einem der vorangegangenen Ansprüche, **dadurch gekennzeichnet, dass** die sichere Eingabe-/Ausgabe-Baugruppe Hauptteilnehmer (10) und Nebenteilnehmer (11) umfasst, wobei diese Teilnehmer Soll-Zustände und Ist-Zustände verarbeiten und Ist-Zustände erfassen und bei unterschiedlichen Soll- und Ist-Zuständen einen sicheren Zustand herbeiführen.

12. Verfahren nach Anspruch 11, **dadurch gekennzeichnet, dass** ein Nebenteilnehmer (11) den Ist-Zustand eines weiteren Nebenteilnehmers (11) erfasst.

13. Verfahren nach einem der Ansprüche 11 bis 12, **dadurch gekennzeichnet, dass** die Kommunikation zwischen Hauptteilnehmer (10) und Steuerung (22) mittels eines sicheren Datentelegramms erfolgt, wobei es sich vorzugsweise um ein Telegramm nach dem SERCOS ® - Standard handelt.

14. Verfahren nach einem der Ansprüche 11 bis 13, **dadurch gekennzeichnet, dass** der Hautteilnehmer (10) den Ist-Zustand eines Nebenteilnehmers (11) mittels eines Kontrollsignals (13) erfasst.

15. Verfahren nach Anspruch 14, **dadurch gekennzeichnet, dass** das Kontrollsignal (13) einen konstanten Pegel oder einen alternierenden Pegel umfasst.

16. Steuerung, **dadurch gekennzeichnet, dass** diese eine **sichere Eingabe-/Ausgabe-Baugruppe** nach einem der Ansprüche 1 bis 11 umfasst, wobei die Vorrichtung zentral und/oder dezentral zur Steuerung (22) angeordnet ist.

17. Steuerung nach Anspruch 16, **dadurch gekennzeichnet, dass** diese zusätzlich zentrale und/oder dezentrale auch nicht sichere Standard Eingabe-/Ausgabe-Baugruppen umfasst.

18. Steuerung nach Anspruch 16 bis 17, **dadurch gekennzeichnet, dass** diese zusätzlich elektrische Antriebe umfasst.

19. Steuerung nach einem der Ansprüche 16 bis 18, **dadurch gekennzeichnet, dass** es sich um eine Sicherheitssteuerung handelt.

## Claims

1. Safe input/output module having field transmitter interface modules (11) and control interfaces (12, 13, 14, 15) for a controller, where a means for monitoring (10) field transmitter interface modules (11) and control interfaces (12, 13, 14, 15) is included, the field transmitter interface modules being connected to the monitoring means (10) by means of one of the control interfaces (12, 13, 14) and the monitoring means (10) communicating with the controller (22) by means of a further control interface (15), **characterized in that** the field transmitter interface modules (11) are of redundant design such that two standard channels are used to implement a single safe data capture channel, the field transmitter interface modules (11) being standard I/O modules (11) and a safe input or output being implemented by virtue of its being implemented by means of two standard inputs and two standard outputs on a standard I/O module (11).

2. Safe input/output module according to Claim 1, **characterized in that** at least one further field transmitter interface module (11) is used for diagnosis purposes.

3. Safe input/output module according to one of Claims 1 and 2, **characterized in that** the control interfaces (12, 13, 14, 15) comprise a diagnosis output and/or a power supply.

4. Safe input/output module according to one of Claims 1 to 3, **characterized in that** the monitoring means (10) comprises means for clock generation (30), for signal analysis (31), for logic analysis (32), for control (33), for output monitoring (35), for ensuring safe disconnection (35), for self-tests (34), for communication (37) and for storing data (38) and is preferably of redundant design.

5. Safe input/output module according to Claim 1, **characterized in that** a second standard I/O module (11) is provided for each standard I/O module (11).

6. Safe input/output module according to one of Claims 1 to 5 for implementing a safe input and output, **characterized in that** a further standard input (11) is provided for diagnosis purposes.

7. Safe input/output module according to Claim 1, **characterized in that** a plurality of safe inputs and/or outputs are provided.

8. Safe input/output module according to one of the preceding claims, **characterized in that** the monitoring means (10) has the function of a master for the field transmitter interface module (11) and the function of a slave for the controller (22).

9. Safe input/output module according to one of the preceding claims, **characterized in that** the field transmitters are actuators and/or sensors.

10. Safe input/output module according to one of the preceding claims, **characterized in that** a field bus (12, 15) is used for data communication.

11. Method for the safe detection of application process states produced by means of a controller using a safe input/output module according to at least one of the preceding claims, **characterized in that** the safe input/output module comprises primary subscribers (10) and secondary subscribers (11), these subscribers processing nominal states and actual states and detecting actual states and bringing about a safe state when the nominal and actual states are different.

12. Method according to Claim 11, **characterized in that** a secondary subscriber (11) detects the actual state of a further secondary subscriber (11).

13. Method according to one of Claims 11 and 12, **characterized in that** the communication between primary subscriber (10) and controller (22) is effected using a safe data message, this preferably being a message based on the SERCOS^{®} standard.

14. Method according to one of Claims 11 to 13, **characterized in that** the primary subscriber (10) detects the actual state of a secondary subscriber (11) using a control signal (13).

15. Method according to Claim 14, **characterized in that** the control signal (13) comprises a constant level or an alternating level.

16. Controller, **characterized in that** it comprises a safe input/output module according to one of Claims 1 to 11, the apparatus being arranged centrally and/or locally for the controller (22).

17. Controller according to Claim 16, **characterized in that** it additionally comprises central and/or local and also non-safe standard input/output modules.

18. Controller according to Claims 16 and 17, **characterized in that** it additionally comprises electrical drives.

19. Controller according to one of Claims 16 to 18, **characterized in that** it is a safety controller.

## Revendications

1. Module entrée/sortie, sécurisé pour des modules de raccordement d'appareils de terrain (11) et d'interfaces de commande (12, 13, 14, 15) pour une commande, selon lequel il est prévu un moyen pour surveiller (10) les modules de branchement d'appareils de terrain (11) et les interfaces de commande (12, 13, 14, 15),
les modules de branchement d'appareils de terrain étant reliés par l'une des interfaces de commande (12, 13, 14) au moyen de surveillance (10) et le moyen de surveillance (10) communique avec la commande (22) par d'autres interfaces de commande (15),
**caractérisé en ce que**
les modules de branchement d'appareils de terrain (11) sont redondants de façon que pour réaliser un unique canal de saisie de données, sécurisé, on utilise deux canaux standards,
les modules de branchement d'appareils de terrain (11) étant des modules standards entrée / sortie (11) et pour réaliser une entrée ou une sortie sécurisée on les réalise au moins avec deux entrées standards et deux sorties standards d'un module entrée/sortie standard (11).

2. Module entrée/sortie sécurisé selon la revendication 1,
**caractérisé en ce qu'**
au moins un autre module de branchement d'appareils de terrain (11) sert à des fins de diagnostic.

3. Module entrée/sortie sécurisé selon l'une des revendications 1 à 2,
**caractérisé en ce que**
les interfaces de commande (12, 13, 14, 15) comportent une sortie de diagnostic et/ou une entrée d'alimentation en énergie.

4. Module entrée/sortie sécurisé selon l'une des revendications 1 à 3,
**caractérisé en ce que**
le moyen de surveillance (10) comporte des moyens pour générer une cadence (30) pour l'analyse de signal (31), pour l'analyse logique (32), pour la commande (33), pour la surveillance de sortie (35), pour assurer une coupure garantie (35), pour les tests automatiques (34), pour la communication (37) et pour la mémorisation de données (38) et ces moyens sont de préférence redondants.

5. Module entrée/sortie sécurisé selon la revendication 1,
**caractérisé en ce qu'**
un second module entrée/sortie standard (11) est prévu pour chaque module entrée / sortie standard (11).

6. Module entrée/sortie sécurisé selon l'une des revendications 1 à 5, pour réaliser une entrée ou une sortie sécurisée,
**caractérisé par**
une autre entrée standard (11) destinée à des fins de diagnostic.

7. Module entrée/sortie sécurisé selon la revendication 1,
**caractérisé par**
plusieurs entrées et/ ou sorties sécurisées.

8. Module entrée/sortie sécurisé selon l'une des revendications précédentes,
**caractérisé en ce que**
par rapport au module de branchement d'appareils de terrain (11), le moyen de surveillance (10) assure la fonction d'un maître et par rapport à la commande (22) il assure la fonction d'un esclave.

9. Module entrée/sortie sécurisé selon l'une des revendications précédentes,
**caractérisé en ce que**
les appareils de terrain sont des actionneurs et/ ou des capteurs.

10. Module entrée/sortie sécurisé selon l'une des revendications précédentes,
**caractérisé en ce que**
pour la communication de données on utilise un bus de terrain (12, 15).

11. Procédé pour garantir la saisie d'états de procédé d'application générés par l'intermédiaire d'une commande à l'aide d'un module entrée/sortie sécurisé selon au moins l'une des revendications précédentes,
**caractérisé en ce que**
le module entrée/sortie sécurisé comprend des participants principaux (10) et des participants auxiliaires (11), ces participants traitant des états de consigne et des états réels et saisissent les états réels et en cas d'états de consigne et d'états réels différents, ils établissent un état sécurisé.

12. Procédé selon la revendication 11,
**caractérisé en ce qu'**
un participant auxiliaire (11) saisit l'état réel d'un autre participant auxiliaire (11).

13. Procédé selon l'une des revendications 11 à 12,
**caractérisé en ce que**
la communication entre les participants principaux (10) et la commande (22) se fait à l'aide d'un télégramme de données, sécurisées, et il s'agit de préférence d'un télégramme selon le standard SERCOS® (marque déposée).

14. Procédé selon l'une des revendications 11 à 13,
**caractérisé en ce que**
le participant principal (10) saisit l'état réel d'un participant auxiliaire (11) à l'aide d'un signal de contrôle (13).

15. Procédé selon la revendication 14,
**caractérisé en ce que**
le signal de contrôle (13) comprend un niveau constant ou un niveau alterné.

16. Commande
**caractérisée en ce qu'**
elle comporte un module entrée/sortie sécurité selon l'une des revendications 1 à 11, dans laquelle le dispositif est installé en position centrale et/ou en position décentralisée par rapport à la commande (22).

17. Commande selon la revendication 16,
**caractérisée en ce qu'**
elle comporte en plus des modules entrée/sortie centraux et/ou décentralisés, standards, même non sécurisés.

18. Commande selon les revendication 16 à 17,
**caractérisée en ce qu'**
elle comporte des moyens d'entraînement électriques supplémentaires.

19. Commande selon l'une des revendications 16 à 18,
**caractérisée en ce qu'**
il s'agit d'une commande de sécurité.
